(19) Europäisches Patentamt
European Patent Office
Office européen des brevets

(11) EP 0 685 053 B1

(12) **EUROPEAN PATENT SPECIFICATION**

(45) Date of publication and mention
of the grant of the patent:
**29.12.1997 Bulletin 1997/52**

(21) Application number: **93916372.1**

(22) Date of filing: **20.07.1993**

(51) Int Cl.[6]: **F17D 1/20**, F24D 10/00

(86) International application number:
**PCT/SE93/00634**

(87) International publication number:
**WO 94/02775 (03.02.1994 Gazette 1994/04)**

(54) **DEVICE FOR FAST SECTIONING**

SCHNELLSCHLUSSVORRICHTUNG FÜR ROHRLEITUNGEN

DISPOSITIF DE COUPURE RAPIDE

(84) Designated Contracting States:
**DE DK SE**

(30) Priority: **20.07.1992 SE 9202201**

(43) Date of publication of application:
**06.12.1995 Bulletin 1995/49**

(73) Proprietor: **FLUDEX AB**
**S-421 59 V. Frölunda (SE)**

(72) Inventor: **GUSTAVSSON, Bror, Arne**
**S-421 59 Västra Frölunda (SE)**

(74) Representative: **Mossmark, Anders et al**
**Albihn West AB,**
**Box 142**
**401 22 Göteborg (SE)**

(56) References cited:
**EP-A- 0 289 485          DE-A- 3 416 811**
**DE-B- 1 178 989**

• **PATENT ABSTRACTS OF JAPAN, Vol. 12, No.
212, M-710; & JP,A,63 014 000 (IDEMITSU
KOSAN CO LTD), 21 January 1988 (21.01.88).**

## Description

TECHNICAL FIELD:

The present invention relates to an arrangement for quick sectioning of a liquid or gas carrying pipe system having a forward pipe and a return pipe which permits quick sectioning, i.e. arbitrary quick sectioning, to occur without water hammering arising in the forward pipe or in the return pipe and which consists of at least one control device in the pipe system's forward or return pipe, and of quick-closing sectioning valves in the pipe system's feed and return pipes, which valves form a sectioning location.

BACKGROUND OF THE INVENTION:

When connecting gas or liquid filled pipe systems having forward and return pipes, such as district heating systems, to larger systems, conflicts often arise between the pressure levels in the various networks. The reason can be that the local pipe networks are arranged for different construction pressures or that the operating conditions are such that the limits for permitted pressure are exceeded during the connection.

The problems are accentuated by the development of ever larger interconnected district heating systems and made worse by geodetic differences in level.

Conventional solutions to these problems are either to upgrade (reinforce) the local sub networks or to separate the pressure levels in the sub networks with the aid of heat exchangers.

The heat exchangers do however present the disadvantage that they require a certain temperature difference between the heated and the cooled medium. The temperature of the feed pipe becomes a few degrees lower and the temperature of the return pipe a few degrees higher after the heat exchange. These disadvantages, which are well known, considerably restrict the advantages with connection to large pipe networks.

In the following, the expression "head" will be frequently used.

The head is defined by the equation

$$H = \frac{p}{\rho g} + z$$

where

p = the fluid's pressure above atmospheric      Pa
$\rho$ = the density of the fluid          kg/m$^3$
g = force due to gravity (9.81)          m/s$^2$
z = the level, so called additional height          m

The pressure head has the advantage that its value, contrary to the pressure itself, is not affected by the geodetic layout of the pipe.

During steady operation the pressure head levels in different sub networks with hydraulic connections are kept apart by means of pumping and restriction. This works as long as the equipment is operating and there is flow in the system.

The pressure levels must however be kept separate at all instances in time. Should an interruption of operation occur, for example during a power cut when the pumps stop, the various network sections must be hydraulically separated from each other very quickly. This must occur so quickly that the different pressure levels do not have time to equalize.

Rapid valve closings are exceedingly hazardous manoeuvres in a pipe network and normally result in such large pressure transients (water hammering) that they are impossible to carry out.

A device for restricting water hammering is previously known from EP-A1-0 289 485. This arrangement does not however comprise a continuously regulating component which continuously maintains the differential pressure at zero or close to zero at the sectioning location. Passing over during normal operation must therefore be prevented with the help of closed valves across which a differential pressure acts. Accordingly, water hammering is also unavoidable during quick sectioning. This known arrangement relates more to a method for limiting maximum and minimum pressure than for preventing water hammering from arising.

An arrangement is previously known from DE-A1-3 416 811 which permits direct connection between various sub networks with differing pressure levels in district heating systems. DE-A1-3 416 811 relates to a method to maintain (extend in time) the flow between two sub networks until they have been able to be isolated from each other. DE-A1-3 416 811 extends the run-on time of the return pump by allowing the pump to be partially driven by a turbine which is simultaneously used for pressure reduction. Since both the turbine and the pump have an efficiency coefficient less than one and the turbine additionally requires a control valve, additional power must be supplied to the shaft of the return pump which implies that the problem is solved in a complicated manner.

SUMMARY OF THE INVENTION:

The object of the present invention is to permit quick valve closing during sectioning without water hammering arising.

Said object is achieved by means of an arrangement according to the invention which is characterized in that the control device is arranged to continuously maintain the differential pressure at the sectioning location close to or equal to zero, in that at least one connecting conduit is arranged between the forward pipe and the return pipe in the pipe system, in that the connecting conduit of the sectioning location is always open, in that the flow in the connecting conduit is close to or equal to zero during normal operating conditions, in that said connecting conduit or conduits have a dimension greater than or equal to that of the pipelines which are to be quickly sectioned, in that after closure the quickly closing sectioning valves separate with respect to pressure conditions the parts of the pipe system beyond the sectioning location from the main pipe system, wherein the flow in the main pipe system protected from water hammering remains substantially unchanged during the quick sectioning, i.e. the flow through the connecting conduit during the quick sectioning remains as large as the flow to the parts of the pipe system beyond the sectioning location before the quick sectioning.

By means of the present invention quick sectioning during, for example, interruptions in operation can take place very quickly without unallowable pressure transients propagating to the main network. According to a preferred embodiment, the local networks pipes are also protected from water hammering.

The invention is based on the principal method of solving this by short circuiting the forward and return pipes, i.e. by not stopping the flow but instead diverting it along a different path. If the flow velocity in the pipes is not changed, water hammering will not arise either.

No significant pressure difference between the forward and return pipe must be allowed to occur at the sectioning point. If this were to be the case, then this pressure difference would create a pressure transient in connected network sections.

Another way of expressing the same conditions is: When the flow during quick sectioning is diverted along a different path, it should encounter the same flow resistance as during normal operation. The connecting conduit is therefore not permitted to induce any significant pressure drop when the entire flow after the quick sectioning passes through the conduit. The dimension of the connecting conduit ought therefore to be the same or larger than those pipes which are to be quickly sectioned.

The pressure difference between the forward and return pipes in the vicinity of the sectioning location is however determined by the pressure conditions in the network, which in turn are determined by the prevailing heat load and operated production units and cannot indefinitely be assumed to be zero. The differential pressure normally varies considerably during the season. By taking special measures according to the invention, the differential pressures across the end points of the connecting conduit will always be substantially zero independent of the operating circumstances.

BRIEF DESCRIPTION OF THE DRAWINGS:

The invention will be described in greater detail in the following by way of example only and with reference to the attached drawings in which

Fig. 1                    shows an arrangement for quick sectioning according to the invention in a first embodiment having water hammering protection in two directions,

Figs. 2a, b or c    show examples of connections of the pipe network with different pressure levels to which the invention can be applied,

Fig. 3    shows an arrangement for quick sectioning in a second embodiment with water hammering protection in one direction and

Fig. 4    shows an arrangement for quick sectioning in a third embodiment with water hammering protection in two directions with the aid of an existing heat exchanger.

DETAILED DESCRIPTION OF PREFERRED EMBODIMENTS:

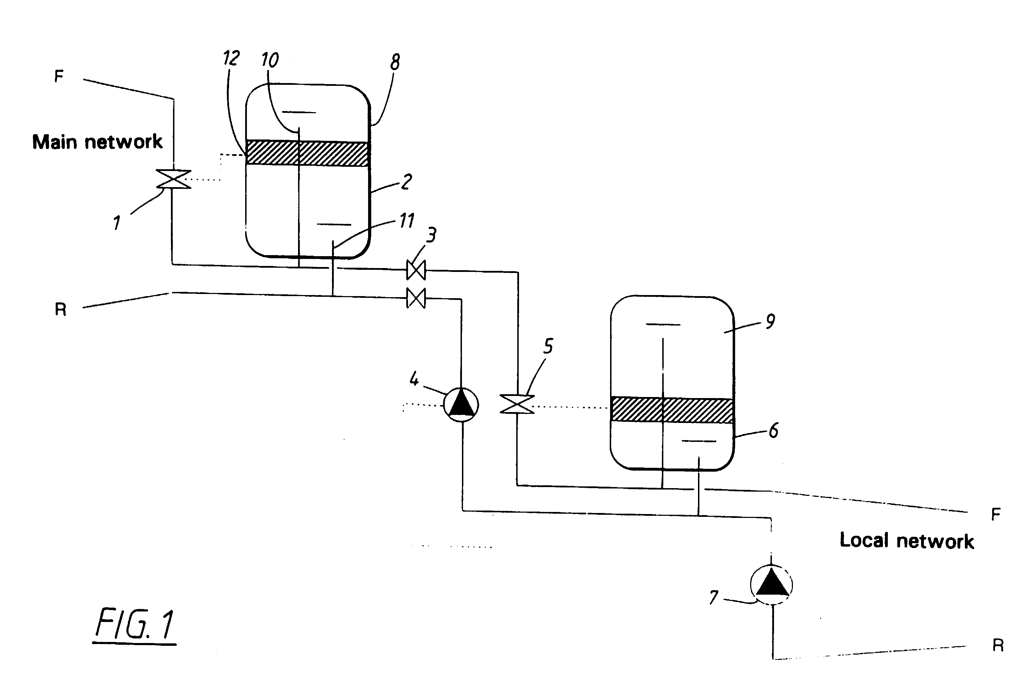

An example of the layout of a quick sectioning arrangement according to the invention, hereinafter referred to as a pressure shunter, is shown in Fig. 1. The example shows a case where the pipe system is in a form of a fluid system for, for example, district heating having a main network and a local network, the local network lying at a lower pressure head level than the main network. In the system there is always a forward pipe F and a return pipe R.

The quick sectioning arrangement consists of a continuously regulating piece of equipment comprising an automatically controlled control valve 1 in the forward pipe of the main network. In addition, an open hydraulic connection 2 between the forward and return pipes is provided, as well as quickly closing sectioning valves 3 positioned thereafter in both the forward pipe and the return pipe. In the shown example a return pump 4, a second control valve 5 and a second open fluid connection 6 between the forward and return pipes are connected in the return pipe. The quick sectioning valves 3 are located between the two fluid connections 2, 6.

A circulation pump 7 is provided in the local network. In the shown example, the open connections 2, 6 are in the form of sealed tanks 8, 9 with an open inlet 10 in the tank which discharges at the top of the tank and an open outlet 11 which runs from a lower level in the tank. The inlet 10 is connected to the forward pipe F, whilst the outlet 11 is connected to the return pipe. One or more temperature sensors 12 are positioned in the tank at a suitably adjusted level and are adapted to control the control valve 1 via a not shown control unit. Analogous (though not identical) conditions apply for the control valve 5 and the connection 6. The open connections 2, 6 within, in the shown example, the completely liquid filled tanks guarantee that the pressure difference between the forward and return is always very close, or equal, to zero.

Accordingly, the forward pipe is in communication with the upper region of the tanks and the return pipe is connected to the lower region of the tanks. The temperature in the tanks upper region is thus approximately equal to the temperature of the forward pipe and the temperature in the lower region of the tanks is substantially equal to the temperature of the return pipe. In Fig. 1 this is symbolized by a so called temperature zone.

The control valve 1 in the forward pipe of the main network maintains the temperature zone in the high pressure tank at a predetermined level and this prevents forward pipe water from flowing across to the return pipe.

In a similar manner, the control valve 5 in the feed pipe of the pressure shunter maintains the temperature zone in the low pressure tank within a predetermined level and prevents overflow.

The return pump 4 in the pressure shunter maintains the local network at a desired pressure level.

The circulation pump 7 in the local network ensures that the district heating water is distributed locally.

When the quick sectioning valves 3 are closed, forward water will be led to the high pressure tank at the same time that the return water flows out in the return pipe. The stored water volumes guarantee that the pipes are not subjected to rapid temperature changes. The water volumes must be at least so large that, after quick sectioning, there is sufficient time for the next operation before erroneous temperatures arise in the pipes. The next operation can for example be a gentle and controlled closure of the separated systems in a normal manner.

An analogous, though not identical, course of events will take place in the low pressure tank 6.

Practically speaking, it is desirable to make the pipelines between the two tanks as short as possible, whilst the pipes in the main network and in the local network can be of arbitrary length.

An important function in the pressure shunter is the regulation of the differential pressure at the sectioning location. The differential pressure should be as close to zero as possible. In the embodiment above it is guaranteed that the pressure difference will be zero because of the open connection. The connection is always open and thus offers the highest safety during quick sectioning. In such case the regulation is concerned with maintaining the temperature zone within a predetermined level.

When the temperature zone is stationary, the same quantity of water is supplied from the forward pipe of the main network which is removed via the forward pipe of the local network. The flow through the high pressure tank thus remains zero. The low pressure tank operates in an analogous manner. The tanks do not have to have the appearance of tanks, but can quite simply be a part of the connecting conduit.

As a desired value, the regulating device has a value derived from the temperature values of the forward and return pipes. The magnitude of the desired value may, for example, be the average value of these temperature values, whilst the actual value is derived from measured temperature values in the medium in the tank or on the tank wall, for example the average value of a number of temperatures in the temperature layer or a single value in the temperature zone, the magnitude of which lies between the values of the forward and return pipes.

It is also possible to control the control valve to zero flow in the connecting conduit with help of flow sensors, or the differential pressure to zero with the help of pressure sensors. Control using temperature is however superior in practice.

It is also conceivable to establish zero flow in the connecting conduit by means of a closed valve. The control valve is controlled towards the differential pressure zero with the help of pressure sensors and the valve in the connecting conduit is opened during the quick sectioning. From a safety viewpoint, what is lacking here however is the great advantage of always having an open connection between the forward and the return pipe.

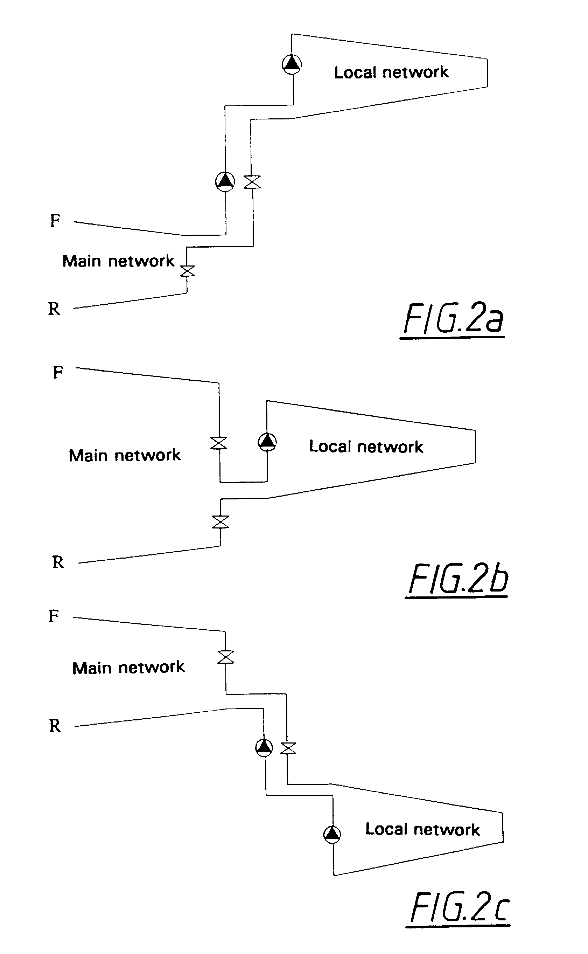

The pressure shunter can be designed in various ways in order to achieve various objects. In Figs. 2a, b and c connections are shown where the pressure head level in the local network lies above (Fig. 2a), between (Fig. 2b) or below the pressure head level in the main network (Fig. 2c). If the difference in pressure head level is small between the sub networks, the pressure shunter is primarily a quick sectioning device which can be used for example to prevent a pollutant from spreading through the network. For the sake of clarity, the components of the invention have not been illustrated in Fig. 2.

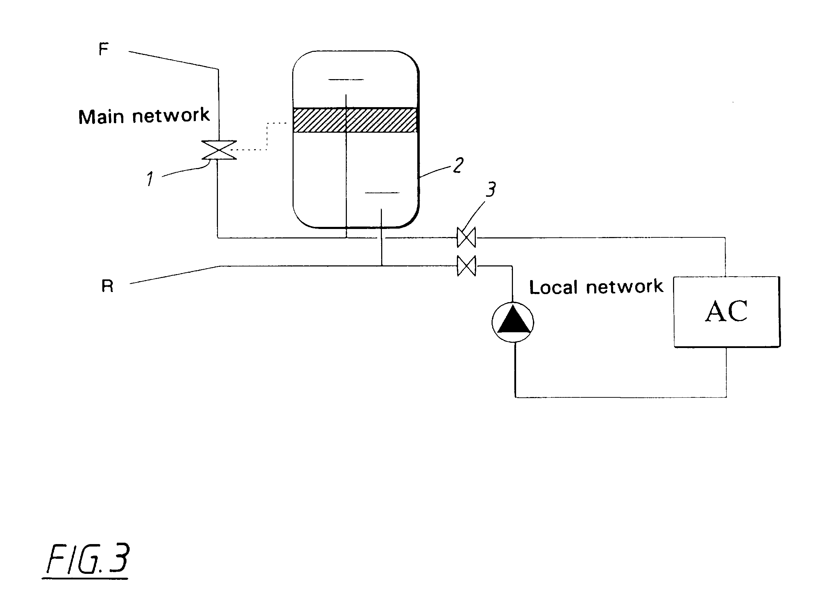

The pipe networks can be large or small. This also applies to the pressure head differences. Fig. 3 depicts an example in which the local network is small (symbolized by a subscriber, central unit) having very short pipes. In terms of quick sectioning, the transient problems in the local network are deemed to be small. The problem is thus to protect the long pipes of the main network from pressure impulses. In such case a one-sided pressure shunter is sufficient.

In order to avoid temperature shocks during quick sectioning, the tanks of the pressure shunter contain a buffer volume. With small temperature differences, i.e. when the temperature shock is deemed to be harmless, the buffer volumes may be eliminated. If the pressure shunter is combined with a heat exchanger, the heat exchanger can replace the function of the buffer volumes by means of cooling/heating and the tanks can be eliminated or merely serve as controlling tanks. In such a configuration, one can switch between pressure shunt operation and heat exchange operation as the operating conditions change.

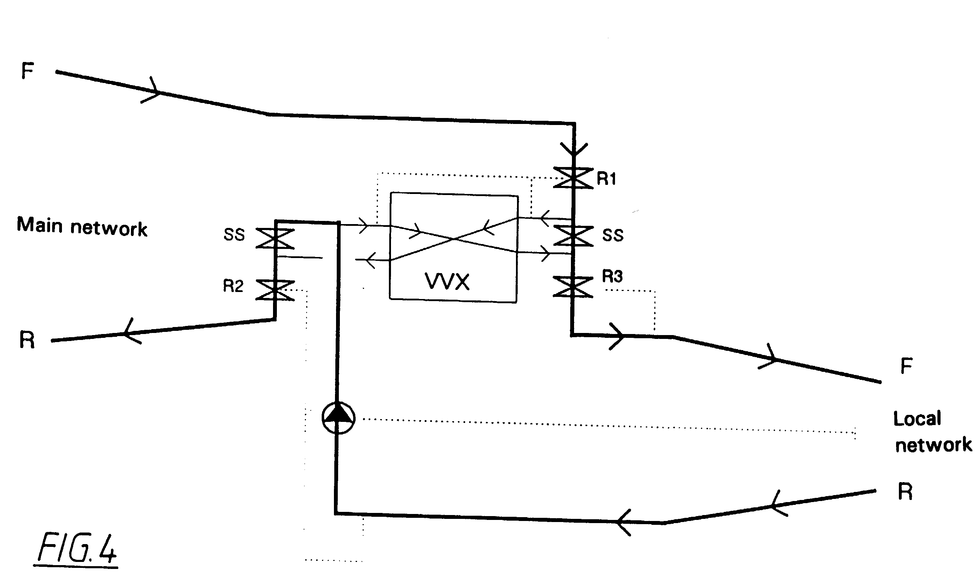

Fig. 4 depicts such a pressure shunter. The figure is drawn so that pressure levels and thus flow directions are illustrated. The figure shows a case in which the circulation pump in the local network has sufficient delivery heights for current pressure levels. During normal operation, small flows (the heating carrying flows) pass through the permanently open connecting conduits (through the heat exchanger VVX), whilst the main flows pass through the open rapid sectioning valves SS. A control valve R1 ensures in this embodiment that the two heating carrying flows through the heat exchanger VVX are of equal size. This implies, in addition to the temperatures being correct, that the heating carrying flows are also as small as possible, as well as that the differential pressures between the forward and return pipes F, R respectively at the sectioning location are substantially equal to zero. A control valve R2 maintains the pressure in the return pipe of the local network in the cases when this is necessary, and a control valve R3 is already totally open. The control valve R3 keeps the pressures in the local network's forward pipe down to permitted levels. During quick sectioning, the arrangement automatically switches over to heat exchange operation without the flows in either the main network or the local network being stopped. Thanks to the permanently open connecting conduits, quick sectioning can take place whenever without water hammering arising.

The buffer volume of the regulating tank (for example the low pressure tank in Fig. 1) can be increased and thus serves as an accumulator, i.e. as a heat store in the system.

The principle of pressure shunting can also apply to systems other than district heating. What is required is a forward pipe and a return pipe. In addition, parameters other than temperature can be used for regulating, for example concentration, tracers, colour, e t c, whereby corresponding types of sensor replace the temperature sensor. In the claims, the expression "downstream components" has been used, whereby the components are viewed in the flow direction in the forward pipe.

**Claims**

1. Arrangement for quick sectioning of a liquid or gas carrying pipe system having a forward pipe and a return pipe which permits quick sectioning, i.e. arbitrary quick sectioning, to occur without water hammering arising in the forward pipe (F) or in the return pipe (R) and which consists of at least one control device (15) in the pipe system's forward or return pipe, and of quick-closing sectioning valves (3) in the pipe system's feed and return pipes, which valves form a sectioning location **characterized** in that the control device (1) is arranged to continuously maintain the differential pressure at the sectioning location close to or equal to zero, in that at least one connecting conduit (2) is arranged between the forwarding and return pipe in the pipe system, in that the connecting conduit (2) of the sectioning location is always open, in that the flow in the connecting conduit is close to or equal to zero during normal operating conditions, in that said connecting conduit or conduits have a dimension greater than or equal to that of the pipelines which are to be quickly sectioned, in that after closure the quick closing sectioning valves (3) separate with respect to pressure conditions the parts of the pipe system beyond the sectioning location from the main pipe system, wherein the flow in the main pipe system protected from water hammering remains substantially unchanged during the quick sectioning, i.e. the flow through the connecting conduit during the quick sectioning remains as large as the flow to the parts of the pipe system beyond the sectioning location before the quick sectioning.

2. Arrangement according to claim 1, **characterized** in that the parts of the pipe system downstream of the sectioning location are also protected from water hammering by means of a second connecting conduit (6) being provided downstream of the sectioning location (3), in that a second regulating arrangement (5) is arranged to maintain the differential pressure across the end points of the second connecting conduit close to zero or equal to during normal operating conditions, wherein the flow in the forward and return pipes downstream of the sectioning location also remains substantially unaltered during quick sectioning.

3. Arrangement according to claim 1 or 2, **characterized** in that the flow through the connecting conduit during normal operating conditions is maintained close to zero or equal to zero by means of a continuously regulating device being controlled with respect to the gradient, for example the temperature gradient, which arises in the connecting conduit (2) as a result of different values, for example temperature values, in the forward and return pipes, in that in addition to the medium for the gradient, the connecting conduit can also contain buffer volumes so that the medium in the forward pipe cannot flow over into the return pipe within a certain predetermined period after the quick sectioning, in that the continuously controlling device (1) has as a desired value a value derived from values from the forward and return pipes, for example temperature values, the magnitude of which desired value lies between these values, e.g. the average value, in that the continuously controlling device has as an actual value a value derived from measured values, for example temperature values, in the medium within the connecting conduit or on the wall of the conduit, for example the average value of a number of temperatures in the temperature zone, or a single value in the temperature zone, the magnitude of which lies between the values of the forward and return pipes.

4. Arrangement according to claim 1, 2 or 3, **characterized** in that the connection between the forward and return pipes occurs via a tank.

5. Arrangement according to claim 1, **characterized** in that the connecting conduits which are always open between the forward and return pipes (F, R) pass through a heat exchanger (VVX), in that at least one continuously controlling device is arranged to keep the heating carrying flows small through the heat exchanger and thereby the differential pressures across the end points of the connecting conduits substantially zero under normal operating conditions, whereby the flows in the forward and return pipes on both sides of the sectioning location remains substantially unaltered during the quick sectioning.

**Patentansprüche**

1. Anordnung zum schnellen Sektionieren eines flüssigkeits- oder gasführenden Rohrleitungssystems mit einer Vorwärtsleitung und einer Rückführleitung, die es gestattet, daß ein schnelles Sektionieren, d.h. willkürliches schnelles Sektionieren, ohne ein Entstehen eines Wasserschlagens in der Vorwärtsleitung (F) oder in der Rückführleitung (R) auftritt und die aus wenigstens einer Steuervorrichtung (15) in der Vorwärts- oder Rückführleitung des Rohrleitungssystems und schnellschließenden Sektionierventilen (3) in den Vorwärts- und Rückführleitungen des Rohrleitungssystems besteht, welche Ventile eine Sektionierstelle bilden, **dadurch gekennzeichnet,** daß die Steuervorrichtung (1) angeordnet ist, um den Differenzialdruck an der Sektionierstelle ständig auf nahezu oder gleich Null aufrecht zu halten, daß wenigstens eine verbindungsleitung (2) zwischen der Vorwärts- und Rückführleitung in dem Rohrleitungssystem angeordnet ist, daß die Verbindungsleitung (2) der Sektionierstelle immer offen ist, daß die Strömung in der Verbindungsleitung während normaler Betriebsbedingungen auf nahezu oder gleich Null ist, daß die Verbindungsleitung oder -leitungen Abmessungen hat/haben, die größer sind als jene oder gleich sind zu jenen der Rohrleitungen, die schnell sektioniert werden sollen, daß die schnellschließenden Sektionierventile (3) nach dem Schließen hinsichtlich der Druckbedingungen die Teile des Rohrleitungssystems hinter der Sektionierstelle vom Hauprohrleitungssystem trennen, wobei die Strömung in dem Hauprohrleitungssystem, das gegen Wasserschlagen geschützt ist, während des schnellen Sektionierens im wesentlichen unverändert bleibt, d.h. die Strömung durch die Verbindungsleitung bleibt während des schnellen Sektionierens genau so groß wie die Strömung zu den Teilen des Rohrleitungssystems hinter der Sektionierstelle vor dem schnellen Sektionieren.

2. Anordnung nach Anspruch 1, **dadurch gekennzeichnet**, daß die Teile des Rohrleitungssystems stromabwärts der Sektionierstelle ebenfalls gegen Wasserschlagen mittels einer zweiten Verbindungsleitung (6) geschützt sind, die stromabwärts der Sektionierstelle (3) vorgesehen ist, daß eine zweite Regelanordnung (5) angeordnet ist, um den Differenzialdruck über den Endpunkten der zweiten Verbindungsleitung auf nahezu Null oder gleich dem während normaler Betriebsbedingungen aufrecht zu halten, wobei die Strömung in den Vorwärts- und Rückführleitungen stromabwärts der Sektionierstelle während einer schnellen Sektionierung ebenfalls im wesentlichen unverändert bleibt.

3. Anordnung nach Anspruch 1 oder 2, **dadurch gekennzeichnet,** daß die Strömung durch die Verbindungsleitung während normaler Betriebsbedingungen nahezu auf Null oder gleich Null mittels einer kontinuierlich regelnden Vorrichtung aufrechterhalten wird, die bezüglich des Gradienten, zum Beispiel des Temperaturgradienten, gesteuert wird, der in der Verbindungsleitung (2) als Folge verschiedener Werte, zum Beispiel Temperaturwerte, in den Vorwärts- und Rückführleitungen entsteht, daß zusätzlich zu dem Medium für den Gradienten die Verbindungsleitung ebenfalls Puffervolumina enthalten kann, so daß das Medium in der Vorwärtsleitung innerhalb einer bestimmten vorgegebenen Periode nach dem schnellen Sektionieren nicht in die Rückführleitung überlaufen kann, daß die kontinuierlich steuernde Vorrichtung (1) als einen gewünschten Wert einen Wert hat, der von Werten von den Vorwärts- und Rückführleitungen, zum Beispiel Temperaturwerten, erhalten wird, wobei die Größe des gewünschten Wertes zwischen diesen werten liegt, wie z.B. der Mittelwert, daß die kontinuierlich steuernde Vorrichtung als einen tatsächlichen Wert einen Wert hat, der von gemessenen Werten, zum Beispiel Temperaturwerten, in dem Medium innerhalb der Verbindungsleitung oder an der Wand der Leitung, erhalten wurde, zum Beispiel der Mittelwert einer Anzahl von Temperaturen in der Temperaturzone oder ein Einzelwert in der Temperaturzone, dessen Größe zwischen den Werten der Vorwärts- und Rückführleitungen liegt.

4. Anordnung nach Anspruch 1, 2 oder 3, **dadurch gekennzeichnet,** daß die Verbindung zwischen den Vorwärts- und Rückführleitungen über einen Tank stattfindet.

5. Anordnung nach Anspruch 1, **dadurch gekennzeichnet**, daß die Verbindungsleitungen, die zwischen den Vorwärts- und Rückführleitungen (F, R) immer offen sind, durch einen Wärmetauscher (VVX) hindurchgehen, daß wenigstens eine kontinuierlich steuernde Vorrichtung angeordnet ist, um die wärmeführenden Strömungen durch den Wärmetauscher klein und dadurch die Differenzialdrükke über den Endpunkten der Verbindungsleitungen unter normalen Betriebsbedingungen im wesentlichen auf Null zu halten, wodurch die Strömungen in den vorwärts- und Rückführleitungen auf beiden Seiten der Sektionierstelle während des schnellen Sektionierens im wesentlichen unverändert bleiben.

## Revendications

1. Ensemble de sectionnement rapide d'un système de canalisations transportant un liquide ou un gaz, ayant une canalisation d'alimentation et une canalisation de retour qui permet un sectionnement rapide, c'est-à-dire un sectionnement rapide arbitraire, sans effet de bélier hydraulique dans la canalisation d'alimentation (F) ou dans la canalisation de retour (R), et qui est constitué d'au moins un dispositif de commande (1, 5) placé dans la canalisation d'alimentation ou de retour du circuit de canalisations, et de vannes (3) de sectionnement à fermeture rapide placées dans les canalisations d'alimentation et de retour du circuit de canalisations, les vannes formant un emplacement de sectionnement, caractérisé en ce que le dispositif de commande (1) est destiné à maintenir constamment la pression différentielle à l'emplacement du sectionnement à une valeur égale à zéro ou proche de zéro, en ce qu'un conduit de raccordement au moins (2) est placé entre la canalisation d'alimentation et la canalisation de retour dans le circuit de canalisations, en ce que le conduit de raccordement (2) à l'emplacement de sectionnement est toujours ouvert, en ce que le débit dans le conduit de raccordement est égal à zéro ou proche de zéro dans les conditions normales de fonctionnement, en ce que le conduit ou les conduits de raccordement ont une dimension supérieure ou égale à celle des canalisations qui doivent être sectionnées rapidement, et en ce que, après fermeture, les vannes (3) de sectionnement à fermeture rapide séparent, au point de vue des conditions de pression, les parties du circuit de canalisations qui se trouvent au-delà de l'emplacement de sectionnement du circuit principal de canalisations, dans lequel le débit dans le circuit principal de canalisations protégé contre le bélier hydraulique reste pratiquement inchangé au cours du sectionnement rapide, c'est-à-dire que le débit dans le conduit de raccordement pendant le sectionnement rapide reste égal au débit vers les parties du circuit de canalisations qui se trouvent au-delà de l'emplacement de sectionnement avant le sectionnement rapide.

2. Ensemble selon la revendication 1, caractérisé en ce que les parties du circuit de canalisations qui se trouvent en aval de l'emplacement de sectionnement sont aussi protégées contre le bélier hydraulique par un second conduit de raccordement (6) placé en aval de l'emplacement de sectionnement (3), et en ce qu'un second ensemble de régulation (5) est disposé afin qu'il maintienne la pression différentielle entre les points d'extrémité du second conduit de raccordement à proximité d'une valeur nulle ou égale à la valeur obtenue dans les conditions normales de fonctionnement, dans lequel le débit dans les canalisations d'alimentation et de retour en aval de l'emplacement de sectionnement reste aussi pratiquement non modifié au cours du sectionnement rapide.

3. Ensemble selon la revendication 1 ou 2, caractérisé en ce que le débit dans le conduit de raccordement dans les conditions normales de fonctionnement est maintenu à une valeur proche de zéro ou égale à zéro par un dispositif de régulation continue qui est commandé par un gradient, par exemple le gradient de température, qui existe dans le conduit de raccordement (2) du fait des différentes valeurs, par exemple des valeurs de température, dans les canalisations d'alimentation et de retour, en ce que, en plus du fluide utilisé pour le gradient, le conduit de raccordement peut aussi contenir des volumes tampons tels que le fluide de la canalisation d'alimentation ne peut pas s'écouler dans la canalisation de retour pendant une certaine période prédéterminée après le sectionnement rapide, et en ce que le dispositif de commande continue (1) a, comme valeur voulue, une valeur dérivée de valeurs des canalisations d'alimentation et de retour, par exemple des valeurs de température, l'amplitude de la valeur voulue étant comprise entre ces valeurs, par exemple égale à la valeur moyenne, en ce que le dispositif de commande continue utilise, comme valeur réelle, une valeur dérivée des valeurs mesurées, par exemple des valeurs de température, dans le fluide qui se trouve dans le conduit de raccordement ou sur la paroi du conduit, par exemple la valeur moyenne d'un certain nombre de températures dans la zone de température, ou une valeur unique dans la zone de température dont l'amplitude est comprise entre les valeurs des canalisations d'alimentation et de retour.

4. Ensemble selon la revendication 1, 2 ou 3, caractérisé en ce que le raccordement entre les canalisations d'alimentation et de retour s'effectue par une cuve.

5. Ensemble selon la revendication 1, caractérisé en ce que les conduits du raccordement qui sont toujours ouverts entre les canalisations d'alimentation et de retour (F, R) passent dans un échangeur de chaleur (VVX), en ce qu'au moins un dispositif de commande continue est destiné à maintenir les courants transmettant le chauffage à une faible valeur, dans l'échangeur de chaleur, si bien que les pressions différentielles entre les points d'extrémité des conduits du raccordement sont pratiquement nulles dans les conditions normales de fonctionnement et que les débits dans les canalisations d'alimentation et de retour des deux côtés de l'emplacement de sectionnement restent pratiquement sans changement au cours du sectionnement rapide.

FIG.1

_FIG.2a_

_FIG.2b_

_FIG.2c_

F

Main network

1

2

3

Local network

AC

R

_FIG.3_

F

Main network

SS

R2

R

VVX

R1

SS

R3

F

Local
network

R

FIG.4

EP 0 685 053 B1